# EUROPEAN PATENT APPLICATION

(11) **EP 4 697 303 A1**
(43) Date of publication of application: **18.02.2026**
(21) Application number: 25184442.9
(22) Date of filing: 23.06.2025
(51) Int. Cl.: G08G 5/21, G08G 5/23, G08G 5/24, G08G 5/32, G08G 5/55

(54) **SYSTEMS AND METHODS FOR REDUCING EMISSIONS OF AN AIRCRAFT**

(30) Priority: 15.08.2024 US 202418805638
(71) Applicant: The Boeing Company, Arlington, VA 22202 (US)
(72) Inventor: KUDVA, Rajashekar, Arlington, 22202 (US); DEV, Viniil, Arlington, 22202 (US); AUGUSTINE, Edison Satish, Arlington, 22202 (US); KIM, Geun, Arlington, 22202 (US); CORBETT, Kevin Patrick, Arlington, 22202 (US)
(74) Representative: Boult Wade Tennant LLP

(57) **Abstract**

A system and a method include a user interface including a display and an input device. The input device is configured to be operated to provide parameters for a flight of an aircraft. A control unit is in communication with the user interface. The control unit is configured to receive the parameters from the user interface, and determine one or both of emissions of the aircraft during phases of the flight of the aircraft, or emissions costs for the flight of the aircraft.

## Description

### FIELD OF THE DISCLOSURE

Examples of the present disclosure generally relate to systems and methods for reducing emissions of an aircraft during various phases of flight.

### BACKGROUND OF THE DISCLOSURE

Aircraft are used to transport passengers and cargo between various locations. Numerous aircraft depart from and arrive at a typical airport every day.

As can be appreciated, when operating an aircraft, it is desirable to reduce fuel costs. Certain regulatory agencies impose taxes and/or penalties in relation to emissions by aircraft within airspaces. A flight management computer of an aircraft can provide different speed modes, such as long range cruise, economy, selected speed mode, and required time of arrival. Selection of a particular mode during a particular flight phase can increase efficiency, and optimize fuel consumption, and thereby achieve overall time and cost goals desired by an operator.

However, the different speed modes typically do not account for permitted levels of emissions, such as set by different countries, regulatory agencies, and/or the like.

### SUMMARY OF THE DISCLOSURE

A need exists for a system and a method for accounting for emissions costs of a flight of an aircraft. Further, a need exists for a system and a method for reducing emissions during a flight of an aircraft.

With those needs in mind, certain examples of the present disclosure provide a system including a user interface having a display and an input device. The input device is configured to be operated to provide parameters for a flight of an aircraft. A control unit is in communication with the user interface. The control unit is configured to receive the parameters from the user interface, and determine one or both of emissions of the aircraft during phases of the flight of the aircraft, or emissions costs for the flight of the aircraft. In at least one example, the control unit is configured to determine both the emissions of the aircraft during phases of the flight of the aircraft, and the emissions costs for the flight of the aircraft. Examples of the parameters include a flight path, airspeeds, and altitudes for the phases of the flight of the aircraft.

In at least one example, the system also includes one or more sensors configured to detect emissions of the aircraft. As a further example, the one or more sensors include one or more carbon dioxide sensors. As a further example, the one or more carbon dioxide sensors are coupled to one or more engines of the aircraft.

In at least one example, the aircraft includes the user interface and the control unit.

The system can also include a performance database in communication with the control unit. The performance database stores green factors regarding the emissions and the emissions costs. As a further example, the performance database also stores drag factors and fuel flow factors for the aircraft.

In at least one example, the control unit is further configured to show one or both of the emissions, or the emissions costs on the display of the user interface.

In at least one example, the user interface is configured to allow for selection of a green mode for the flight. The green mode is configured to generate a reduced amount of the emissions.

In at least one example, the control unit is further configured to automatically operate one or more controls of the aircraft during the flight to reduce one or both of the emissions or the emissions costs.

The control unit can be an artificial intelligence or machine learning system.

Certain examples of the present disclosure provide a method including receiving, by the control unit, the parameters from the user interface; and determining, by the control unit, emissions of the aircraft during phases of the flight of the aircraft, and emissions costs for the flight of the aircraft.

Certain examples of the present disclosure provide an aircraft including the system described herein.

### BRIEF DESCRIPTION OF THE DRAWINGS

Figure 1 illustrates a block diagram of a system, according to an example of the present disclosure.
Figure 2 illustrates a flow chart of a method, according to an example of the present disclosure.
Figure 3 illustrates a flow chart of a method, according to an example of the present disclosure.
Figure 4 illustrates a schematic block diagram of a control unit, according to an example of the present disclosure.
Figure 5 illustrates a front view of a display, according to an example of the present disclosure.
Figure 6 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide systems and methods that are configured to reduce carbon emissions during different phases of flight, such as by optimizing flight path parameters using carbon profiles and a green flight index, which can be input into a control unit, such as a flight management computer of an aircraft. The control unit analyzes such inputs, in addition to performance parameters, to provide a flight path, altitudes, and airspeeds for the aircraft, which are configured to optimize thrust and reduce fuel burn, which decreases a carbon foot print, and thereby reduces any carbon taxes or penalties.

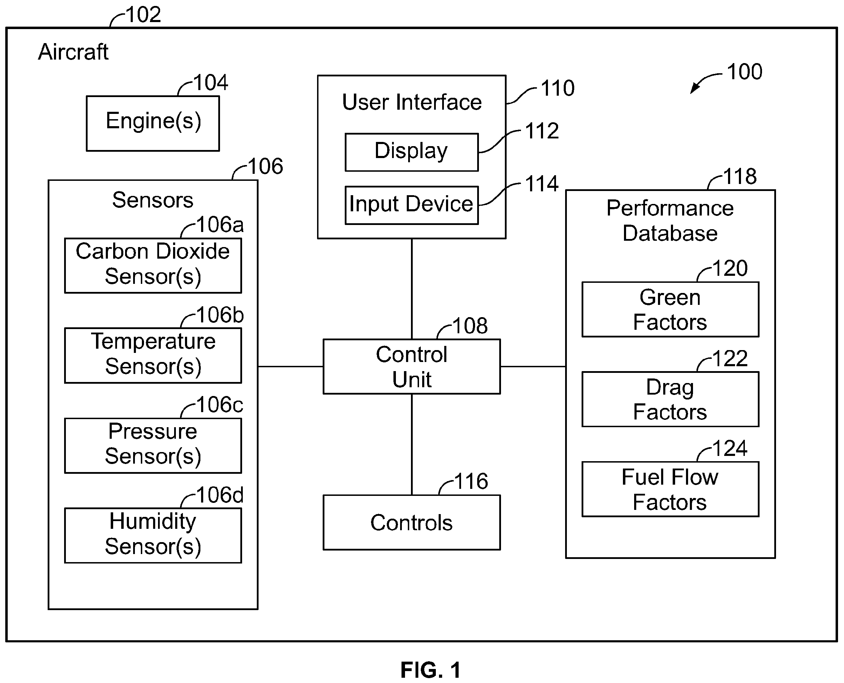

Figure 1 illustrates a block diagram of a system 100, according to an example of the present disclosure. In at least one example, the system 100 is onboard an aircraft 102. The aircraft 102 includes one or more engines 104, which are powered by fuel, and which generate thrust and emissions.

The aircraft 102 also includes sensors 106 configured to detect various environmental conditions. For example, one or more carbon dioxide sensors 106a are configured to detect carbon dioxide emissions of the engine(s) 104. The carbon dioxide sensors 106a can be mounted on and/or within the engine(s) 104. Optionally, the carbon dioxide sensors 106a can be mounted proximate to the engine(s) 104, such as downstream from an exhaust of the engine(s) 104.

In other examples, one or more temperature sensors 106b are configured to detect temperature. For example, the temperature sensors(s) 106b can be mounted on or within the engine(s) 104, and configured to detect an internal or external temperature of the engine(s) 104. As another example, the temperature sensor(s) 106b can be thermometers secured to other portions of the aircraft 102, and configured to detect an ambient temperature of air outside of the aircraft 102.

In other examples, one or more pressure sensors 106c are configured to detect pressure. For example, the pressure sensor(s) 106c can be mounted on or within the engine(s) 104, and configured to detect an internal pressure of the engine(s) 104. In other examples, the pressure sensor(s) 106c can be barometers secured to other portions of the aircraft, and configured to detect atmospheric air pressure.

In other examples, one or more humidity sensors 106d are configured to detect humidity. For example, the humidity sensor(s) 106d can be mounted on or within the engine(s) 104, and configured to detect humidity within the engine(s) 104. In other examples, the humidity sensor(s) can be secured to other portions of the aircraft 102, and configured to detect atmospheric humidity.

The aircraft 102 can include more or less sensors 106 that shown. For example, the aircraft 102 can include a temperature sensor 106b configured to detect a temperature of the engine(s) 104, as well as another temperature sensor 106b configured to detect ambient air temperature. In other examples, the aircraft 102 can include a pressure sensor 106c configured to detect an internal pressure of the engine(s) 104, as well as another pressure sensor 106c configured to detect atmospheric air pressure. In other examples, the aircraft 102 can include a humidity sensor 106d configured to detect humidity within the engine(s) 104, and another humidity sensor 106d configured to detect atmospheric humidity. Optionally, the sensors 106 may not include one or more of the temperature sensor(s) 106b, the pressure sensor(s) 106c, and/or the humidity sensor(s) 106d.

A control unit 108 is in communication with the sensors 106 through one or more wired or wireless connections. In at least one example, the control unit 108 is or otherwise include a flight management computer. Optionally, the control unit 108 can be remote from the aircraft 102, such as at a monitoring location, which can be land-based, and in communication with the aircraft 102 through a communication device, such as one or more antennas, one or more transceivers, one or more radios, and/or the like.

The control unit 108 is also in communication with a user interface 110 onboard the aircraft 102. The user interface 110 can be part of a computer workstation, such as within a cockpit or flight deck of the aircraft 102. For example, the flight management computer can include the user interface 110. The flight management computer typically receives data regarding a flight plan between a departure airport and an arrival or destination airport, for example. The flight management computer can be used to control aspects of the aircraft 102. For example, the flight management computer can be used to automatically control operation of the aircraft 102. In other examples, the user interface 110 is a handheld device, such as a smartphone, smart tablet, or the like. Optionally, examples of the present disclosure may not include a user interface, such as in an unmanned aircraft.

The user interface 110 includes a display 112 and an input device 114. The user interface 110 can be used by a pilot to monitor operations, control operations, review information, and/or the like. In at least one example, the display 112 is an electronic monitor, television, and/or the like, and the input device 114 includes one or more of a keyboard, a mouse, a stylus, and/or the like. In at least one example, the display 112 and the input device 114 are integrated as a touchscreen interface.

The aircraft 102 includes controls 116, which are used to control operation of the aircraft 102. Examples of the controls 116 include a steering console, a yoke, a joystick, one or more brakes, buttons, dials, keys, accelerators, buttons or pedals, and/or the like. In at least one example, the control unit 108 is in communication with the controls 116, such as through one or more wired or wireless connections.

The control unit 108 is also in communication with a performance database 118, such as through one or more wired or wireless connections. As shown, the performance database 118 can be onboard the aircraft 102. Optionally, the performance database 118 can be remote from the aircraft 102, such as at a monitoring location.

The performance database 118 stores performance data for the aircraft 102. In at least one example, the performance database 118 stores the performance data for the particular aircraft 102, in contrast to data for a generic aircraft other than the aircraft 102. The performance data includes information regarding operational capabilities of the aircraft 102. For example, the performance data includes information regarding how much fuel the aircraft 102 having a particular weight will burn at a particular airspeed, at a particular altitude, for a particular period of time, etc. In at least one example, the performance data includes one or more performance models for the aircraft 102. The performance models for the aircraft can be predetermined and stored in a memory. The performance models can include generic performance models for a type, class, or family of aircraft. For example, a generic performance model for a particular type of aircraft, such as a Boeing 737, can be determined upon the aircraft 102 being manufactured. The performance data can also be based on the generic performance model and historical data for the specific aircraft 102. In at least one example, the performance data is based on historical data from prior flights of the specific aircraft 102.

The performance database 118 stores green factors 120, which include emissions information regarding the aircraft 102. The emissions information include previous (stored from previous flight(s) and/or predicted (from performance models, for example) emissions, such as carbon dioxide emissions, by the aircraft 102 during various phases of previous and/or future flights. For example, the emissions information includes various levels of emissions for the aircraft 102 at various airspeeds and altitudes at various phases of flight. The emissions information provides different levels of emissions at different airspeeds and different altitudes.

In at least one example, the green factors 120 also include emissions costs (such as taxes or penalties imposed by one or more regulatory agencies) for different levels of emissions. For example, emissions costs may be associated with various combination of airspeeds, altitudes, and locations.

In at least one example, the performance database 118 also stores drag factors 122 and fuel flow factors 124 for the aircraft 102. The drag factors 122 include aeroelastic effects for the aircraft during different phases of flight, such as climb, cruise, and descent phases. The drag factors 122 include the aeroelastic effects for the aircraft 102 during the different phases of flight at various speeds, weights, and the like. The fuel flow factors 124 include information regarding fuel consumption of the aircraft 102 during the different phases of flight.

In operation, the control unit 108 analyzes the green factors 120, and optionally the drag factors 122 and/or the fuel flow factors 124 for the aircraft 102 during the different phases of flight, such as the climb phase, the cruise phase, and the descent phase. The green factors 120, the drag factors 122, and the fuel flow factors 124 differ during the different phases of flight. A first set of green factors 120, drag factors 122 and fuel flow factors 124 during a climb phase differs from a second set of green factors 120, drag factors 122 and fuel flow factors 124 during a cruise phase, which, in turn, differs from a third set of green factors 120, drag factors 122 and fuel flow factors 124 during a descent phase.

In at least one example, the control unit 108 operates to show different options for a flight on the display 112 of the user interface 110. For example, the control unit 108 is configured to provide emissions information for various different airspeeds, altitudes, locations, and the like for various different phases of a flight of the aircraft 102 on the display 112. In this manner, the control unit 108 allows an operator of the aircraft 102 to view various different options for emissions information on the display 112. For example, the operator can input information for a proposed flight path, airspeeds, and altitudes for various phases of flight. Based on the input information, the control unit 108 retrieves the green factors 120 for such input information, and then outputs a signal including data regarding the emissions costs associated with the input information. The control unit 108 determines the emissions costs by comparing the input information (for example, proposals for airspeeds, altitudes, locations within different airspaces, and the like) with the emissions information associated with the aircraft 102 in relation to the input information, as well as emissions costs (such as taxes, penalties, or the like assessed by regulatory agencies at different locations). The control unit 108 shows the resulting emissions costs on the display 112, thereby allowing the operator to assess if such costs outweigh other factors, such as time of arrival. For example, while a flight at a relatively direct route within airspaces having stricter emissions costs may arrive at a destination faster, the operator may opt for a different flight path at different airspeeds and/or altitudes to avoid the associated emissions costs.

In at least one example, the operator may select, through the input device 114, a green mode for a flight, which reduces emissions by the aircraft 102, and also reduces emissions costs. The green mode may include a flight path that differs from a more direct route to a destination, but generates a reduced amount of emissions by the aircraft, and reduces emissions costs.

During the flight, the sensors 106 detect various aspects of the aircraft 102 and/or environment. For example, the carbon dioxide sensor(s) 106a detect carbon dioxide emitted by the engine(s) 104 of the aircraft 102. In at least one example, the operator can select one or more emissions limits for the flight via the input device 114. If the carbon dioxide sensor(s) 106a detect carbon dioxide emissions during the flight approaching the emissions limit(s) (such as 90% of the emissions limits), the control unit 108 can automatically operate the controls 116 to reduce an airspeed, change an altitude, and/or the like of the aircraft 102 to reduce the emissions.

For example, the operator may select a green mode for the flight, in which the aircraft 102 is not to exceed a particular magnitude of carbon dioxide emissions at a particular phase of flight. The control unit 108 receives signals from the sensors 106 which include data regarding sensed aspects. For example, the control unit 108 receives signals form the carbon dioxide sensor(s) 106a that include information regarding emitted carbon dioxide. If the control unit 108 determines that the emitted carbon dioxide is not within a predetermined percentage of a predetermined emissions limit magnitude, the control unit 108 does not interrupt current operation of the aircraft 102. However, if the control unit 108 determines that the emitted carbon dioxide has reached the predetermined percentage (and/or approaches an emissions penalty or tax), the control unit 108 automatically operates the controls 116 (such as by reducing an airspeed, changing an altitude, deviating from a current flight path, and/or the like) to reduce the emitted carbon dioxide. The control unit 108 can also receive temperature information from the temperature sensor(s) 106b, pressure information form the pressure sensor(s) 106c, and/or humidity information form the humidity sensor(s) 106d in a similar manner, and automatically operate the aircraft 102, via the controls 116, in a similar manner to avoid temperature, pressure, and/or humidity limits, which can be set by an operator via the user interface 110. In this manner, the control unit 108 is configured to automatically operate the aircraft 102 to reduce emissions, and avoid or otherwise reduce emissions costs. Alternatively, the control unit 108 may not be configured to automatically operate the aircraft 102.

In at least one example, the control unit 108 can also determine (for example, estimate) a fuel level for the aircraft 102 prior to a flight based on the drag factors 122 and the fuel flow factors 124 during the different phases of flight, instead of just an average set of factors or factors during a cruise phase. The green factors 120, the drag factors 122, and the fuel flow factors 124 for the different phases of flight, such as the climb phase, the cruise phase, and the descent phase, are analyzed by the control unit 108, which can provide configurable parameters, which can be shown on the display 112. In at least one example, the control unit 108 adjusts for drag polar aeroelastic effects and consequences for fuel flow based on the drag factors 122 and the fuel flow factors 124 during the different phases of flight. Because the control unit 108 analyzes the green factors 120, the drag factors 122, and the fuel flow factors 124 for the different phases of flight (for example, each and every phase of flight), the control unit 108 can synchronize a trip cost estimate of a flight plan with actual fuel burn in long range flights.

In at least one example, the control unit 108 provides the green factors 120, and optionally the drag factors 122 and the fuel flow factors 124 for the climb phase, the cruise phase, and the descent phase of a flight, and can show such green factors 120, the drag factors 224, and fuel flow factors 226 as configurable parameters on the display 112. As shown, the display 112 can be onboard the aircraft 102. Optionally, the display 112 can be remote from the aircraft 102. In at least one example, the control unit 108 can show the information on a display 112 within the aircraft 102, and another display 112 that is remote from the aircraft 102.

As described herein, the control unit 108 incorporates emissions costs (as included within the green factors 120) for various flight plans. The control unit 108 associates the emissions costs with aircraft model, engine specific carbon dioxide profile tables, and/or the like as an input to determine a desired flight profile. In at least one example, an operator can operate the user interface 110 to input a green flight index (for example, a desired green mode of operation), which is received by the control unit 108 to predict emissions and any penalties and costs associated therewith. During a flight, the operator can choose to follow the enhanced profile by selecting the green mode of flight for climb, cruise and/or descent phases. The control unit 108 can show various emission profiles for different flight options on the display 112.

As described herein, the system 100 includes the user interface 110 including the display 112 and the input device 114, which is configured to be operated to provide parameters for a flight of an aircraft. The flight can be a future flight, which has yet to be flown. Optionally, the flight can be in progress, and the operator can input parameters for future portions of the flight. The control unit 108 is in communication with the user interface 110. The control unit 108 is configured to receive the parameters from the user interface 110, and determine one or both of emissions of the aircraft 102 during phases of the flight of the aircraft 102, or emissions costs for the flight of the aircraft 102. In at least one example, the parameters includes a flight path, airspeeds, and altitudes for the phases of the flight of the aircraft.

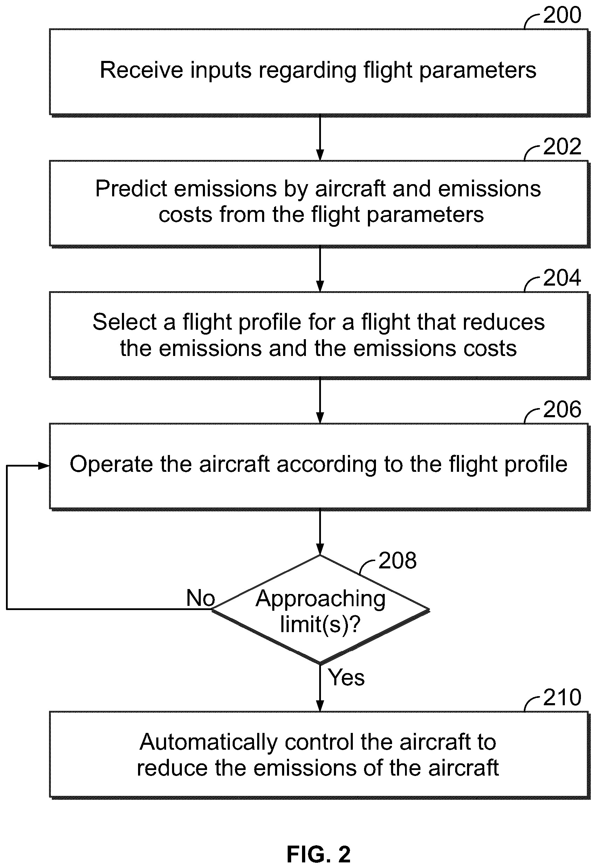

Figure 2 illustrates a flow chart of a method, according to an example of the present disclosure. Referring to Figures 1 and 2, at 200, the control unit 108 receives inputs regarding flight parameters for various phases of a flight between a departure airport and a destination airport. The flight parameters include a flight path, altitudes, airspeeds, and the like for the various phases. In at least one example, an operator (such as a pilot) enters the flight parameters via the input device 114 of the user interface 110.

At 202, the control unit 108 analyzes the flight parameters with data in the performance database 118 to predict emissions by the aircraft 102, and emissions costs for the various phases. For example, the performance database 118 includes data regarding the aircraft 102, such as historical emissions, and emissions models that are used to predict emissions at particular airspeeds, altitudes, and the like. The control unit 108 determines the predicted emissions and emissions costs by comparing the input flight parameters with the data within the performance database 118, such as information within the green factors 120.

At 204, the operator selects a flight profile for a flight that reduces the emissions and the emissions costs. For example, the control unit 108 can show predicted emissions and emissions costs for entered flight parameters on the display 112 of the user interface 110. Based on this information, the operator can select a flight profile as one including the input flight parameters, or input different flight parameters if the predicted emissions and emissions costs are undesirably high.

At 206, after the flight profile is selected, the aircraft is operated according to the profile. The control unit 108 monitors emissions information of the aircraft during the flight, such as via data signals received from one or more of the sensors 106, such as the carbon dioxide sensor(s) 106a. At 208, the control unit 108 determines if the emissions, as detected by the carbon dioxide sensor(s) 106a are approaching a predetermined limit regarding the emissions and/or emissions costs. The predetermined limit can be 90% of an emissions magnitude, or an emissions cost (such as a penalty or tax). Optionally, the predetermined limit can be less than 90% (such as 75%), or greater than 90% (such as 95%). If the emissions have not reached the limit, the method returns to 206, at which the aircraft 102 continues to be operated according to the flight profile. If, however, the emissions reach the limit, the method proceeds from 208 to 210, at which the control unit 108 automatically operates the controls 116 to automatically control the aircraft 102 to reduce the emissions of the aircraft 102.

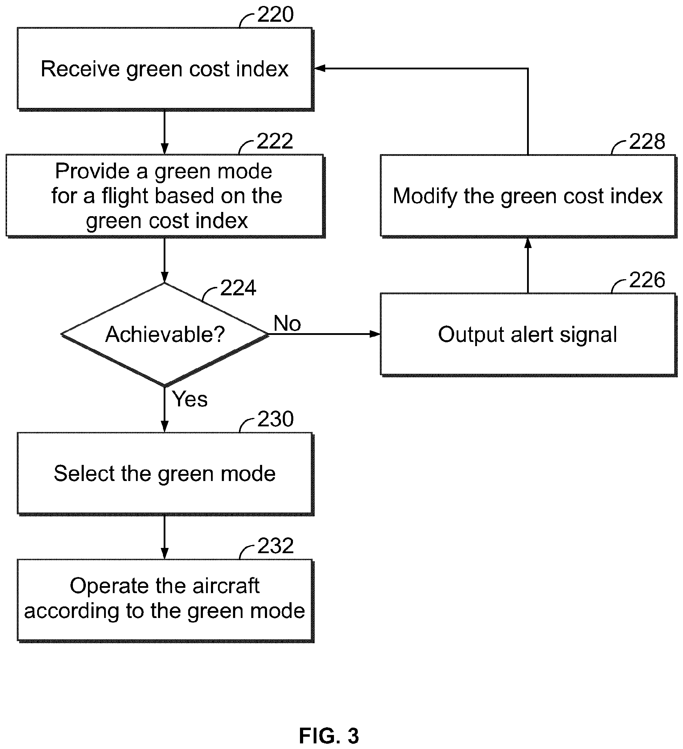

Figure 3 illustrates a flow chart of a method, according to an example of the present disclosure. In at least one example, a method includes determining if carbon dioxide profile bands are available. For example, the carbon dioxide profile bands relate to emissions of an aircraft at various flight parameters. The control unit 108 searches a database, such as the performance database 118, for such carbon dioxide profile bands. If such are not available, an individual, such as an operator, can input the information. For example, the operator can uplink the profile bands from another source.

Referring to Figures 1 and 3, instead of entering flight parameters, the operator can instead input a green cost index via the user interface 110. The green cost index includes a desired amount of emissions (for example, an emissions limit) for various phases of flight, and/or a desired amount of emissions costs (such as no emissions taxes or penalties, or emissions taxes or penalties that do not exceed a particular amount). At 220, the control unit 108 receives the green cost index, and, at 222 provides a green mode for a flight, which includes a flight path, airspeeds, altitudes, and the like for the various phases that conform to the green cost index. At 224, the control unit 108 then determines if the green mode is achievable for the flight, given time constraints, flight path restrictions, and/or the like. If not, the method proceeds from 224 to 226, at which the control unit 108 outputs an alert signal, which is shown in the display 112, and indicates that the operator needs to modify the green cost index to achieve an acceptable green mode for the flight. At 228, the operator modifies one or more portions of the green cost index (such as by adjusting desired emissions and/or desired emissions costs). The method then returns to 220. If, however, the green mode is achievable at 224, the control unit 108 outputs an acceptance signal, which is shown on the display 112 indicating that the green mode is achievable. At 230, the operator then selects the green mode. At 232, the aircraft 102 is operated according to the green mode. The control unit 108 can also automatically operate the aircraft 102, through automatic operation of the controls 116, to ensure conformance with the green mode (that is, emissions targets and/or emissions costs are achieved).

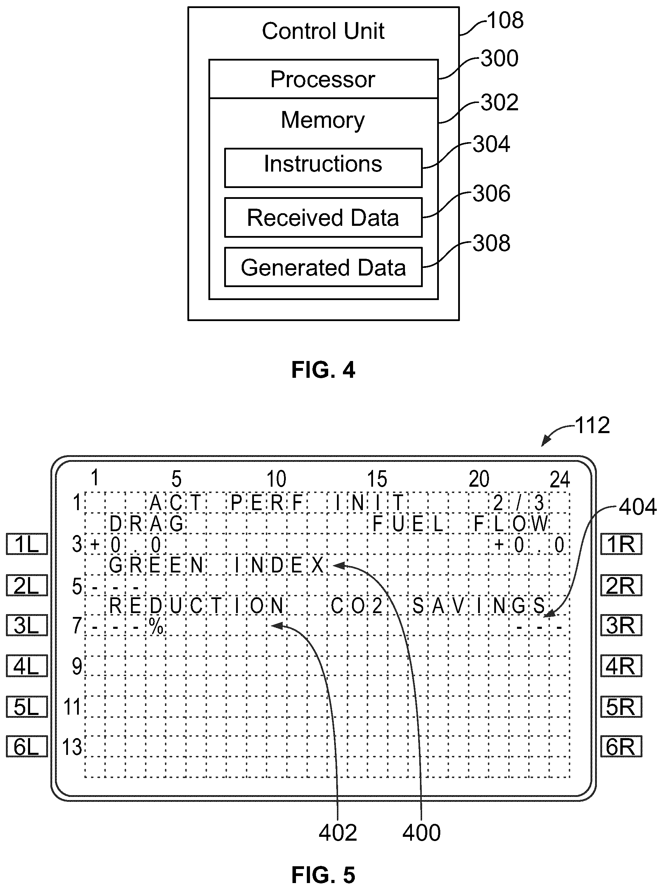

Figure 4 illustrates a schematic block diagram of the control unit 108, according to an example of the present disclosure. In at least one example, the control unit 108 includes at least one processor 300 in communication with a memory 302. The memory 302 stores instructions 304, received data 306, and generated data 308. The control unit 108 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 108 may be or include one or more processors that are configured to control operation, as described herein.

The control unit 108 is configured to execute a set of instructions that are stored in one or more data storage units or elements (such as one or more memories), in order to process data. For example, the control unit 108 may include or be coupled to one or more memories. The data storage units may also store data or other information as desired or needed. The data storage units may be in the form of an information source or a physical memory element within a processing machine.

The set of instructions may include various commands that instruct the control unit 108 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 108. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 108 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-4, examples of the subject disclosure provide systems and methods that allow large amounts of data to be quickly and efficiently analyzed by a computing device. For example, the control unit 108 can analyze various flight parameters of the aircraft 102 in relation to emissions information. As such, large amounts of data, which may not be discernable by human beings, are being tracked and analyzed. The vast amounts of data are efficiently organized and/or analyzed by the control unit 108, as described herein. The control unit 108 analyzes the data in a relatively short time in order to quickly and efficiently determine emissions information and/or green modes of flight. A human being would be incapable of efficiently analyzing such vast amounts of data in such a short time. As such, examples of the present disclosure provide increased and efficient functionality, and vastly superior performance in relation to a human being analyzing the vast amounts of data.

In at least one example, components of the system 100, such as the control unit 108, provide and/or enable a computer system to operate as a special computer system for automatically determining emissions information and green modes for flights of aircraft. The control unit 108 improves upon standard computing devices by determining the information in an efficient and effective manner.

As noted, the control unit 108 can automatically operate the aircraft 102 to reduce emissions and emissions cots. For example, the control unit 108 can automatically operate the controls 116 (such as an autopilot system) to automatically control one or more aspects of the aircraft 102 to reduce the emissions of the aircraft 102, as well as reduce emissions costs of a flight of the aircraft 102.

In at least one example, all or part of the systems and methods described herein may be or otherwise include an artificial intelligence (AI) or machine-learning system that can automatically perform the operations of the methods also described herein. For example, the control unit 108 can be an artificial intelligence or machine learning system. These types of systems may be trained from outside information and/or self-trained to repeatedly improve the accuracy with how data is analyzed to automatically determine emissions and costs associated therewith. Over time, these systems can improve by determining the information with increasing accuracy and speed, thereby significantly reducing the likelihood of any potential errors. For example, the AI or machine-learning systems can learn and determine the performance capabilities of the aircraft 102, and automatically determine emissions/costs for planned flights of the aircraft 102. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determination of emissions and costs associated therewith. The training minimizes conflicts and interference by performing an iterative training algorithm, in which the systems are retrained with an updated set of data (for example, data received before, during, and/or after each flight of the aircraft 102) and based on the feedback examined prior to the most recent training of the systems. This provides a robust analysis model that can better determine situational information in a cost effective and efficient manner.

Figure 5 illustrates a front view of a display 112, according to an example of the present disclosure. Referring to Figures 1 and 5, the control unit 108 can operate the display to show an area 400 for selected parameters for a green cost index to be input. The display 112 also shows an area 402 for a resulting emissions reduction, and an area 404 for savings. The control unit 108 determines the emissions reduction and the savings based on the parameters input into the green cost index. An operator can input different parameters into the area 400 to see different resulting emissions reductions and savings. It is to be understood that the display 112 shown in Figure 5 is merely an example, and is not limiting.

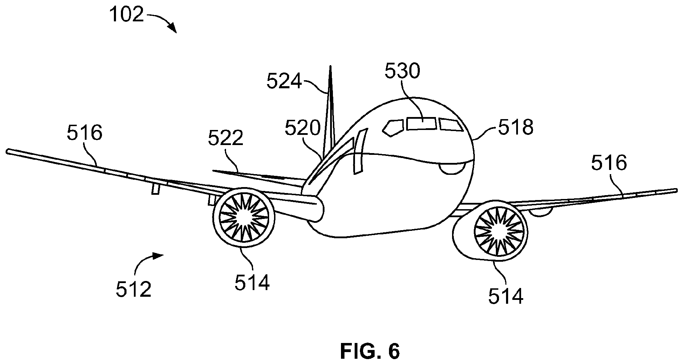

Figure 6 illustrates a perspective front view of an aircraft 102, according to an example of the present disclosure. The aircraft 102 includes a propulsion system 512 that includes engines 514, for example. Optionally, the propulsion system 512 may include more engines 514 than shown. The engines 514 are carried by wings 516 of the aircraft 102. In other examples, the engines 514 may be carried by a fuselage 518 and/or an empennage 520. The empennage 520 may also support horizontal stabilizers 522 and a vertical stabilizer 524. The fuselage 518 of the aircraft 102 defines an internal cabin 530, which includes a flight deck or cockpit, one or more work sections (for example, galleys, personnel carry-on baggage areas, and the like), one or more passenger sections (for example, first class, business class, and coach sections), one or more lavatories, and/or the like. Figure 6 shows an example of an aircraft 102. It is to be understood that the aircraft 102 can be sized, shaped, and configured differently than shown in Figure 2. The aircraft 102 can be configured to carry passengers, and/or cargo, for example.

Further, the disclosure comprises examples according to the following clauses:
Clause 1. A system comprising:
   a user interface including a display and an input device, wherein the input device is configured to be operated to provide parameters for a flight of an aircraft; and
   a control unit in communication with the user interface, wherein the control unit is configured to receive the parameters from the user interface, and determine one or both of emissions of the aircraft during phases of the flight of the aircraft, or emissions costs for the flight of the aircraft.
Clause 2. The system of Clause 1, wherein the control unit is configured to determine both the emissions of the aircraft during phases of the flight of the aircraft, and the emissions costs for the flight of the aircraft.
Clause 3. The system of Clauses 1 or 2, wherein the parameters comprise a flight path, airspeeds, and altitudes for the phases of the flight of the aircraft.
Clause 4. The system of any of Clauses 1-3, further comprising one or more sensors configured to detect emissions of the aircraft.
Clause 5. The system of Clause 4, wherein the one or more sensors comprise one or more carbon dioxide sensors.
Clause 6. The system of Clause 5, wherein the one or more carbon dioxide sensors are coupled to one or more engines of the aircraft.
Clause 7. The system of any of Clauses 1-6, wherein the aircraft includes the user interface and the control unit.
Clause 8. The system of any of Clauses 1-7, further comprising a performance database in communication with the control unit, wherein the performance database stores green factors regarding the emissions and the emissions costs.
Clause 9. The system of Clause 8, wherein the performance database further stores drag factors and fuel flow factors for the aircraft.
Clause 10. The system of any of Clauses 1-9, wherein the control unit is further configured to show one or both of the emissions, or the emissions costs on the display of the user interface.
Clause 11. The system of any of Clauses 1-10, wherein the user interface is configured to allow for selection of a green mode for the flight, wherein the green mode is configured to generate a reduced amount of the emissions.
Clause 12. The system of any of Clauses 1-11, wherein the control unit is further configured to automatically operate one or more controls of the aircraft during the flight to reduce one or both of the emissions or the emissions costs.
Clause 13. The system of any of Clauses 1-12, wherein the control unit is an artificial intelligence or machine learning system.
Clause 14. A method for a system comprising:
   a user interface including a display and an input device, wherein the input device is configured to be operated to provide parameters for a flight of an aircraft; and
   a control unit in communication with the user interface, wherein the control unit is configured to receive the parameters from the user interface, and determine one or both of emissions of the aircraft during phases of the flight of the aircraft, or emissions costs for the flight of the aircraft,
   the method comprising:
      receiving, by the control unit, the parameters from the user interface; and
      determining, by the control unit, emissions of the aircraft during phases of the flight of the aircraft, and emissions costs for the flight of the aircraft.
Clause 15. The method of Clause 14, further comprising detecting, by one or more sensors, emissions of the aircraft.
Clause 16. The method of Clauses 14 or 15, further comprising showing, by the control unit, one or both of the emissions, or the emissions costs on the display of the user interface.
Clause 17. The method of any of Clauses 14-16, further comprising automatically operating, by the control unit, one or more controls of the aircraft during the flight to reduce one or both of the emissions or the emissions costs.
Clause 18. An aircraft comprising:
   one or more engines;
   one or more sensors configured to detect emissions of the aircraft;
   a user interface including a display and an input device, wherein the input device is configured to be operated to provide parameters for a flight of an aircraft, and wherein the parameters comprise a flight path, airspeeds, and altitudes for the phases of the flight of the aircraft; and
   a control unit in communication with the user interface, wherein the control unit is configured to:
      receive the parameters from the user interface,
      determine emissions of the aircraft during phases of the flight of the aircraft, and emissions costs for the flight of the aircraft, and
      show the emissions and the emissions costs on the display of the user interface.
Clause 19. The aircraft of Clause 18, wherein the user interface is configured to allow for selection of a green mode for the flight, wherein the green mode is configured to generate a reduced amount of the emissions.
Clause 20. The aircraft of Clauses 18 or 19, wherein the control unit is further configured to automatically operate one or more controls of the aircraft during the flight to reduce the emissions and the emissions costs.

As described herein, examples of the present disclosure provide system and methods for accounting for emissions costs of a flight of an aircraft. Further, examples of the present disclosure provide systems and methods for reducing emissions during a flight of an aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define features of the various examples of the disclosure, the examples are by no means limiting and are exemplary. Many other examples will be apparent to those of skill in the art upon reviewing the above description. The scope should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope is defined by the claims, and can include other examples that occur to those skilled in the art.

## Claims

1. A system (100) comprising:
a user interface (110) including a display (112) and an input device (114), wherein the input device (114) is configured to be operated to provide parameters for a flight of an aircraft (102); and
a control unit (108) in communication with the user interface (110), wherein the control unit (108) is configured to receive the parameters from the user interface (110), and determine one or both of emissions of the aircraft (102) during phases of the flight of the aircraft (102), or emissions costs for the flight of the aircraft (102).

2. The system (100) of claim 1, wherein the control unit (108) is configured to determine both the emissions of the aircraft (102) during phases of the flight of the aircraft (102), and the emissions costs for the flight of the aircraft (102).

3. The system (100) of claim 1 or 2, wherein the parameters comprise a flight path, airspeeds, and altitudes for the phases of the flight of the aircraft (102).

4. The system (100) of any preceding claim, further comprising one or more sensors (106) configured to detect emissions of the aircraft (102).

5. The system (100) of claim 4, wherein the one or more sensors (106) comprise one or more carbon dioxide sensors (106) and, optionally, the one or more carbon dioxide sensors (106) are coupled to one or more engines (104) of the aircraft (102).

6. The system (100) of any preceding claim, further comprising a performance database (118) in communication with the control unit (108), wherein the performance database (118) stores green factors (120) regarding the emissions and the emissions costs and, optionally, the performance database (118) further stores drag factors (122, 224) and fuel flow factors (124, 226) for the aircraft (102).

7. The system (100) of any preceding claim, wherein the control unit (108) is further configured to show one or both of the emissions, or the emissions costs on the display (112) of the user interface (110).

8. The system (100) of any preceding claim, wherein the user interface (110) is configured to allow for selection of a green mode for the flight, wherein the green mode is configured to generate a reduced amount of the emissions.

9. The system (100) of any preceding claim, wherein the control unit (108) is further configured to automatically operate one or more controls (116) of the aircraft (102) during the flight to reduce one or both of the emissions or the emissions costs.

10. The system (100) of any preceding claim, wherein the control unit (108) is an artificial intelligence or machine learning system (100).

11. A method of operating the system (100) of any preceding claim, the method comprising:
receiving, by the control unit (108), the parameters from the user interface (110); and
determining, by the control unit (108), emissions of the aircraft (102) during phases of the flight of the aircraft (102), and emissions costs for the flight of the aircraft (102).

12. The method of claim 11, further comprising detecting, by one or more sensors (106), emissions of the aircraft (102).

13. The method of claim 11 or 12, further comprising showing, by the control unit (108), one or both of the emissions, or the emissions costs on the display (112) of the user interface (110).

14. The method of any of claims 11 to 13, further comprising automatically operating, by the control unit (108), one or more controls (116) of the aircraft (102) during the flight to reduce one or both of the emissions or the emissions costs.

15. An aircraft (102) comprising:
one or more engines (104); and
the system (100) of any of claims 1 to 10.
